# EUROPEAN PATENT SPECIFICATION

(11) **EP 0 588 777 B1**
(45) Date of publication and mention of the grant of the patent: **21.05.1997**
(21) Application number: 93850178.0
(22) Date of filing: 15.09.1993
(51) Int. Cl.: F01P 3/12, F02B 19/14

(54) **Diesel-engine with swirl chamber**
Wirbelkammer für eine Dieselbrennkraftmaschine
Chambre à tourbillon pour un moteur diesel

(30) Priority: 16.09.1992 SE 9202670
(43) Date of publication of application: 23.03.1994
(73) Proprietor: AB VOLVO PENTA, 405 08 Göteborg (SE)
(72) Inventor: Ekvall, Ragnar, S-422 57 Hisings Backa (SE); Remsu, Ernst, S-413 14 Gothenburg (SE); Salomonsson, Bo, S-424 61 Angered (SE)
(74) Representative: Hellbom, Lars Olof

(56) References cited:
- CH-A- 151 447
- DE-C- 689 072
- SE-C- 62 991
- US-A- 1 798 260

## Description

The present invention relates to a diesel-engine according to the preamble of claim 1.

In so-called swirl chamber diesels it is important that the temperature in the swirl chamber is not allowed to become so high that the injected fuel is vaporized instead of being maintained as a fuel film on the swirl chamber walls. If the fuel is vaporized before it is ignited by the compressed air, an uncontrolled combustion occurs with knocking and serious smoke development as a result. It is therefore important to form the swirl chamber in the cylinder head in such a way that efficient cooling of the same is achieved. Most hitherto known swirl chamber diesels have the swirl chambers cast in the cylinder head. With such a construction it has shown itself to be very difficult to avoid a certain amount of vaporization of fuel prior to ignition during all running conditions which results in higher emissions than desired in modern engines.

US-A-1 798 260 discloses a diesel engine having the features of the preamble of claim 1. The swirl chambers of this engine have an outer wall subjected to a cooling medium such as water, an intermediate sleeve having a very high coefficient of heat conductivity and an inner sleeve formed of a heat-resisting material having a very low coefficient of heat conductivity. The principal object of this arrangement is the production of a swirl chamber which retains a maximum of heat and not an arrangement which avoids vaporisation of fuel prior to ignition.

SE-C-62 991 and CH-A-151 447 disclose diesel engines having swirl chambers made of a single sleeve or two sleeves with openings in the outer sleeve. In both these cases the coooling water will be in direct contact with the wall closest to the chamber. As a result there is a risk that the cooling water will start boiling locally at high engine load.

The object of the present invention is to achieve a swirl chamber diesel with a swirl chamber arrangement which allows production of a cylinder head at low cost whilst at the same time ensuring efficient cooling so that knocking and high emissions are avoided.

This is achieved according to the invention in a diesel engine having the characterizing features of claim 1.

The swirl chamber itself can hereby consist of two simple machined steel sleeves which, when assembled, demarcate the chamber and a seat for the fuel injector. By pressing these steel sleeves into an outer sleeve, the inner sleeve members do not have to be subjected to any treatment which implies local heating and a change of material characteristics, e.g. welding. An outer sleeve with a higher coefficient of thermal conductivity than the steel sleeve members in direct contact with the cooling water ensures efficient removal of heat from the swirl chamber so that vaporization of the fuel and locally boiling water are prevented. In a preferred embodiment, an outer sleeve of copper is used which, apart from having a high coefficient of thermal conductivity, has the advantage of being relatively soft allowing it be easily swaged and in this way fixed into the cylinder head.

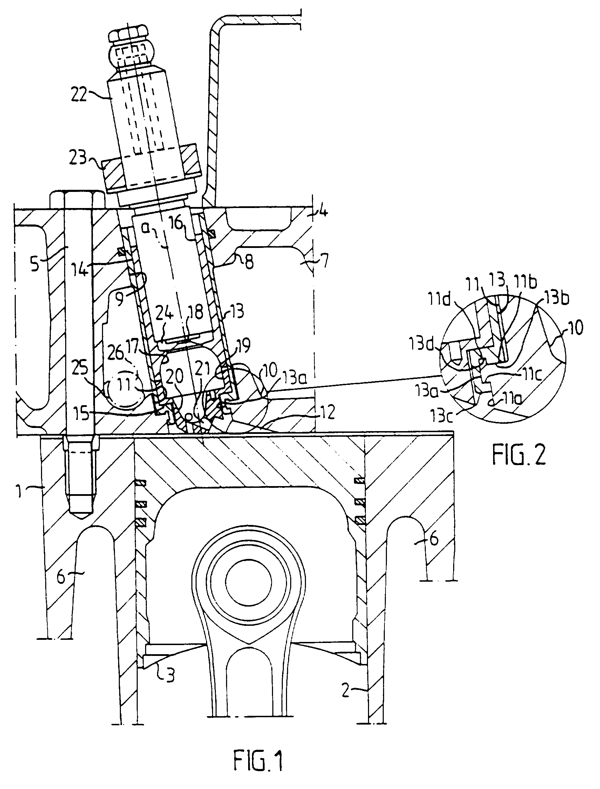

The invention will be described in more detail with reference to an embodiment shown in the accompanied drawings in which Fig. 1 shows a cross-section through a part of an engine block with corresponding cylinder head and Fig. 2 an enlargement of the ringed area in Fig. 1.

In Fig. 1 reference 1 denotes an engine block of a swirl chamber diesel, 2 a cylinder and 3 a piston within the cylinder 2. A cylinder head 4 is fastened by means of screws 5 to the engine block 2. 6 and 7 denote cooling water jackets in the engine block 2 and the cylinder head 4 respectively. A through-drilling 9 is arranged in an upper wall portion 8 of the cylinder head, said drilling extending into the water jacket 7.

A through-drilling 11 with a part lla of smaller diameter than the drilling 9 is arranged in a lower wall portion 10 of the cylinder head. The drillings 9, 11 have a common axis of symmetry "a". The drilling 11 opens out into the cylinder chamber 12 above the upper end of the piston 3.

A sleeve 13 of a metal with a high coefficient of thermal conductivity, preferably copper, is introduced into the drillings 9, 11. The sleeve 13 has a lower portion 13a with reduced diameter. The step 13b formed at the transition with part 13a lies in contact with a step llb of the drilling 11. An end portion 13c is swaged over a step 11c for axial fixing of the sleeve 13. In order to ensure effective sealing between the sleeve 13 and the surrounding material in the cylinder head 4, the step llb is formed with a ridge 11d which projects into a groove 13d in the sleeve 13.

An upper and lower sleeve member 14, 15 respectively of steel are accommodated with an interference fit within the sleeve 13. The upper sleeve member 14 defines an upper cylindrical chamber 16 and a lower hemispherical chamber 17 which communicate with each other via an opening 18. The lower sleeve member 15 defines a cylindrical chamber 19 and a bowl formed chamber 20 with four drillings 21 (one shown) which open into the cylinder chamber 12. Facing end surfaces of the sleeve members 14, 15 lie in contact with each other so that chambers 17, 19 and 20 together define a cavity which forms a swirl chamber.

The upper cylindrical member 14 accommodates a fuel injector 22, which is clamped with the help of a yoke 23 and a pair of screws (not shown) tightened in the cylinder head. The lower end surface is hereby pressed against a sealing ring 24 of soft iron.

A tube 25 directly connected to the water pump (not shown) of the engine is inlaid in the water jacket 7. The tube 25 presents perforations 26 through which water with a lower temperature than the cooling water in the water jacket 7 is sprayed directly towards the lower part of the copper sleeve 13.

By forming a swirl chamber in the manner described above one obtains a reliable construction, especially for small diesels e.g. for pleasure boats by which the outer sleeve 13 conducts away excess heat so that a controlled film combustion with low emissions can occur. The components 13, 14 and 15 are simple sleeve elements which are cheap to manufacture and easy to assemble and fit in the cylinder head.

The basic principal and the combustion process of a swirl chamber diesel is basically the same as that for a precombustion chamber diesel. In order to avoid repeated alternative definitions only the expression "swirl chamber" has been used in the accompanying claims. This is intended hereby to mean swirl chamber or precombustion chamber since these are to be considered as equivalent in this connection.

## Claims

1. Diesel engine comprising a swirl chamber formed in the engine's cylinder head which communicates with the combustion chamber of each cylinder, and a fuel injector injecting into each swirl chamber, wherein respective swirl chambers (17, 19, 20) are formed in a separate sleeve arrangement (13, 14, 15) which is fixed in the cylinder head (4) in its cooling water jacket (7) and comprises concentric sleeve members (13 and 14, 15 respectively), the outer one (13) of which is formed in a material which has a higher coefficient of thermal conductivity than the material of the inner one (14, 15), characterized in that the sleeve arrangement (13,14,15) is mounted in the cooling water jacket (7) so that the outer sleeve member (13) is in direct contact with cooling water.

2. Diesel engine according to claim 1, characterized in that the outer sleeve member (13) consists of copper and the inner one (14, 15) of steel.

3. Diesel engine according to either of claims 1 or 2, characterized in that the inner sleeve member consists of two sleeve parts (14, 15) pressed into the outer sleeve member (13), said sleeve parts defining a cylindrical chamber (16) for a fuel injector (22) and a swirl chamber (17, 19, 20) communicating with said chamber.

4. Diesel engine according to claim 3, characterized in that the swirl chamber (17, 19, 20) has a hemispherical wall (17) facing towards the cylindrical chamber (16) with an opening (18) to said chamber.

5. Diesel engine according to any one of claims 1-4, characterized in that the outer sleeve member (13) is pressed into a drilling (9, 11) in the cylinder head and presents an end portion (13c) which is swaged over a step (llc) at, or close to, an end of said drilling facing the corresponding combustion chamber (12).

6. Diesel engine according to any one of claims 1-5, characterized in that a separate cooling water conduit (25) is inlaid into the water jacket and presents openings (26) through which the cooling water can be sprayed directly from a cooling water pump towards the lower part of the outer sleeve member (13).

## Patentansprüche

1. Dieselmotor mit einer Wirbelkammer, die im Zylinderkopf des Motors eingeformt ist und die mit der Brennkammer jedes Zylinders in Verbindung steht, und mit einem Brennstoff-Injektor, der den Brennstoff in jede Wirbelkammer einspritzt, worin die jeweiligen Wirbelkammern (17,19,20) in einer separaten Hülsen-Anordnung (13,14,15) ausgebildet sind, die ihrerseits im Kühlwasser-Mantel (7) des Zylinderkopfes (4) liegt und konzentrische Hülsenteile (13 und 14 bzw. 15) aufweist, von denen das äussere Hülsenteil (13) aus einem Material hergestellt ist, das einen höheren Wärmeleitkoeffizienten hat als das Material des inneren Hülsenteils (14,15), **dadurch gekennzeichnet**, dass die Hülsen-Anordnung (13,14,15) im Kühlwasser-Mantel (7) angeordnet ist, so dass das äussere Hülsenteil (13) in direkt Kontakt mit Kühlwasser steht.

2. Dieselmotor nach Anspruch 1, **dadurch gekennzeichnet**, daß das äußere Hülsenteil (13) aus Kupfer besteht und das innere Hülsenteil (14, 15) aus Stahl.

3. Dieselmotor nach einem der Ansprüche 1 oder 2, **dadurch gekennzeichnet**, daß das innere Hülsenteil aus zwei Stücken (14, 15) besteht, die in das äußere Hülsenteil (13) eingepreßt sind, wobei die beiden Hülsenstücke eine zylindrische Kammer (16) für einen Brennstoff-Injektor (22) bilden, sowie eine Wirbelkammer (17, 19, 20), die mit dieser Kammer in Verbindung steht.

4. Dieselmotor nach Anspruch 3, **dadurch gekennzeichnet**, daß die Wirbelkammer (17, 19, 20) eine halbkugelförmige Wand (17) hat, die zur zylindrischen Kammer (16) weist und zu dieser Kammer hin eine Öffnung (18) hat.

5. Dieselmotor nach einem der Ansprüche 1 bis 4, **dadurch gekennzeichnet**, daß das äußere Hülsenteil (13) in eine Bohrung (9, 11) im Zylinderkopf eingepreßt ist und einen Endabschnitt (13c) aufweist, der über einen Stufenabsatz (11c) geschmiedet ist, der am oder nahe beim Ende der Bohrung sitzt und auf die entsprechende Brennkammer (12) zuweist.

6. Dieselmotor nach einem der Ansprüche 1 bis 5, **dadurch gekennzeichnet**, daß in den Kühlwassermantel eine separate Kühlwasserleitung (25) eingelegt ist, die Öffnungen (26) aufweist, durch die das Kühlwasser von der Kühlwasserpumpe direkt auf den unteren Teil des äußeren Hülsenteils (13) gesprüht werden kann.

## Revendications

1. Moteur Diesel comprenant une chambre de tourbillonnement formée dans la culasse du moteur qui communique avec la chambre de combustion de chaque cylindre, et un injecteur de carburant injectant dans chaque chambre de tourbillonnement, où des chambres de tourbillonnement respectives (17,19,20) sont formées dans un agencement formant mancon séparé (13,14,15) qui est fixé dans la culasse (4) dans sa chemise (7) à eau de refrodissement et comprend des organes formant manchon concentrique (13 et 14, 15, respectivement), parmi lesquels celui extérieur (13) est formé dans un matériau qui a un plus grand coefficient de conductibilité thermique que le matériau de celui intérieur (14,15), caractérisé en ce que les organes formant manchon (13,14,15) sont montés dans la chemise à eau de refroidessement (7) pour que l'organe formant manchon extérieur (13) soit en contact direct avec eau de refroidessement.

2. Moteur Diesel selon la revendication 1, caractérisé en ce que l'organe formant manchon extérieur (13) est composé de cuivre et celui intérieur (14, 15) d'acier.

3. Moteur Diesel selon la revendication 1 ou 2, caractérisé en ce que l'organe formant manchon intérieur est composé de deux parties formant manchon (14, 15) serrées à l'intérieur de l'organe formant manchon extérieur (13), lesdites parties formant manchon définissant une chambre cylindrique (16) pour un injecteur (22) de carburant et une chambre de tourbillonnement (17, 19, 20) communiquant avec ladite chambre.

4. Moteur Diesel selon la revendication 3, caractérisé en ce que la chambre de tourbillonnement (17, 19, 20) a une paroi hémisphérique (17) faisant face à la chambre cylindrique (16) avec une ouverture (18) vers ladite chambre.

5. Moteur Diesel selon l'une quelconque des revendications 1 à 4, caractérisé en ce que l'organe formant manchon extérieur (13) est serré dans un perçage (9, 11) dans la culasse et présente une portion d'extrémité (13c) qui est matricée au-dessus d'une lèvre (11c) à une extrémité dudit perçage ou proche de celui-ci faisant face à la chambre de combustion correspondante (12).

6. Moteur Diesel selon l'une quelconque des revendications 1 à 5, caractérisé en ce qu'un conduit d'eau de refroidissement séparé (25) est incrusté à l'intérieur de la chemise à eau et présente des ouvertures (26) au travers desquelles l'eau de refroidissement peut être aspergée directement depuis une pompe à eau de refroidissement vers la partie inférieure de l'organe formant manchon extérieur (13).
